# EUROPEAN PATENT APPLICATION

(11) **EP 0 769 367 A2**
(43) Date of publication of application: **23.04.1997**
(21) Application number: 96307569.2
(22) Date of filing: 18.10.1996
(51) Int. Cl.: B31B 19/36

(54) **Method for folding a tubular synthetic resin film**

(30) Priority: 20.10.1995 JP 272722/95
(71) Applicant: IDEMITSU PETROCHEMICAL CO., LTD., Minato-ku, Tokyo (JP)
(72) Inventor: Goto, Shuichi, Idemitsu Petrochemical Co., Ltd., Chuo-ku, Tokyo (JP); Iwamoto, Eiji, Idemitsu Petrochemical Co., Ltd., Chuo-ku, Tokyo (JP)
(74) Representative: Jackson, Peter Arthur

(57) **Abstract**

Into a tubular synthetic resin film (11), a folding member formed to be in the same configuration of which the film is folded is inserted, and the film is folded by adding force along the configuration for folding during the state the folding member is inserted into the film. When the force along the configuration for folding is added to the film, a folding disc (23a,b,c...h), rotating along with the movement of the film, is used. Further, as a prior step the folding member is inserted into the tubular synthetic resin film, it is advisable that the film is previously expanded with an expanding member passing through the inside of the film.

## Description

This invention relates to a method for folding a tubular synthetic resin film, in which is capable of being used for producing a gusset bag or the like.

A gusset bag, having gussets (folding portions) on both side faces of the bag for opening by using the full width of this gusset, has been used as a supermarket shopping bag or the like.

Conventionally, the aforementioned gusset bag is produced by expanding by blowing air into a tubular polyethylene film and folding while pressure is added against the expanded tubular polyethylene film along a specified folded configuration.

According to the aforementioned producing method, however, there has been the following disadvantages.

That is, in a folding process, the expanding state becomes unstable due to decreasing air pressure in the tubular film over a period of time, thereby the measurement for folding has been difficult to maintain. In the case of the tubular film having a different thickness, the folding state is dependent on the different thickness. And further, particularly, when a modified gusset bag having asymmetrical right and left gussets is produced, the measurement for folding is difficult to measure accurately.

A method for folding a tubular synthetic resin film according to the present invention is characterized by inserting a folding member formed to be the configuration, of which a tubular synthetic resin film is folded, into the tubular synthetic resin film; and folding the film by adding force to the film along the configuration, in which the film should be folded, during the state the folding member is inserted into the film.

As described above, since the film is folded by adding the force along the configuration of the folding member to the film during the state the folding member is inserted into the film, regarding lower differences in values of the thickness of the tubular film, the film can be accurately folded to be the specified configuration. Further, it can be used for the complicated folding configuration, so that even a modified gusset bag, having asymmetric gussets in a horizontal direction, can be folded to the same accurate dimensions as the general gusset bag.

In the present invention, when the force along the configuration for folding is added to the film, a folding disc rotating along with the movement of the film is used.

By using of the folding disc, the film can be consistently reliably folded along the configuration of the folding member.

Further, in the present invention, the tubular synthetic resin film may be previously expanded with an expanding member passing through the inside of the film, as in the prior step, the folding member is inserted into the tubular synthetic resin film in the first or second invention.

The configuration of the front side of the expanding member along the moving direction of the film can be selected, but it is advisable to be formed as a quadrangle or a hexagon to respond to the configuration of the folding member.

By folding the film after being previously expanded as described above, the effective folding process can be attained, resulting in a neatly finished state.

The concrete configuration of the folding member is optional, for example, it can be formed to be a configuration corresponding to the gusset bag having a gusset on each side of the gusset bag.

In the accompanying drawings:-
Fig. 1 is a perspective view of an apparatus for folding used in a folding method of a first embodiment according to the present invention;
Fig. 2 is a sectional view showing the folded state of the film in the folding method according to the first embodiment;
Fig. 3 is a sectional view showing the folded state of the film when the other folding member is used in the folding method according to the first embodiment;
Fig. 4 is a perspective view of a folding apparatus used in a folding method of a second embodiment according to the present invention;
Fig. 5 is a sectional view showing the folded state of the film in the folding method according to the second embodiment; and
Fig. 6 is a perspective view of an expanding member used in the second embodiment.

### [FIRST EMBODIMENT]

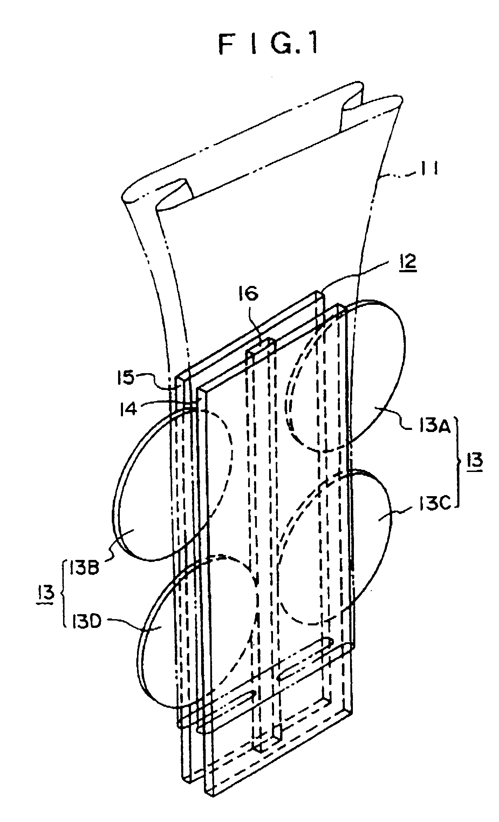

A method for folding a tubular synthetic resin film 11 according to a first embodiment of the present invention will be explained with reference to Fig. 1 to Fig. 3. The embodiment relates to a folding process of the tubular synthetic resin film 11 in order to obtain a gusset bag finally having one gusset on each side.

First, a folding apparatus being used in the embodiment for the folding method will be explained.

The folding apparatus is composed of a folding member 12 and multiple folding discs 13 provided to the folding member 12.

The aforementioned folding member 12 is formed to be a configuration in which the film 11 should be folded. More specifically, the folding member 12 has a first plate 14, a second plate 15 located opposite from the first plate 14, and a third plate 16 coupling the first plate 14 and the second plate 15 mutually.

The aforementioned first and second plates 14 and 15 are approximately the same lateral length as the folded gusset bag. The third plate 16 is approximately the same lateral length as the length between both gussets of the folded gusset bag, and is secured inside at the central point of the first plate 14 and the second plate 15 along the longitudinal direction of both plates 14 and 15. In consequence, the configuration of the front side of the folding member 12 along the moving direction of the film 11 is a zigzag-shape from the first plate 14 to the third plate 16. The folding member 12 is formed by mutually attaching the first plate 14 to the third plate 16 with adhesive or the like, and may be formed to combine the first plate 14 to the third plate 16. Incidentally, the materials of the folding member 12 can be chosen from resin, metal or the like.

The folding member 12 is supported by an appropriate support instrument (not shown) parallel to the flowing direction of the tubular synthetic resin film 11 in the longitudinal direction of the folding member 12.

On the other hand, the aforementioned multiple folding discs 13 have four discs 13A to 13D, in which a pair of folding discs 13A and 13B of the four discs are located at the upper flowing side of the moving direction of the film 11 to be sandwiched between the first and second plates 14 and 15 of the folding member 12, and the other pair of folding discs 13C and 13D are located at the lower flowing side to be sandwiched between the aforementioned first and second plates 14 and 15. Each thickness of the folding discs 13A-13D approximately corresponds to the value subtracted from the thickness of 2-4 pieces of the film 11 from the gap between the aforementioned first and second plates 14 and 15.

The pair of folding discs 13A and 13B located at the upper flowing side are provided to have a slight interspace from the third plate 16. The pair of folding discs 13C and 13D are provided to have a smaller interspace from the third plate 16 than the folding discs 13A and 13B located at the upper flowing side to obtain the configuration in which the film 11 is finally folded. That is, the interspace between the third plate 16 and the folding discs 13C and 13D located at the lower flowing side is, preferably, the interspace for one or two pieces of film 11.

Incidentally, each of the folding discs 13A-13D is provided with a shaft (not shown) for rotatably supporting the discs 13A-13D together with the movement of the film 11.

The method for folding the tubular synthetic resin film 11 of the embodiment is carried out by using the aforementioned folding apparatus.

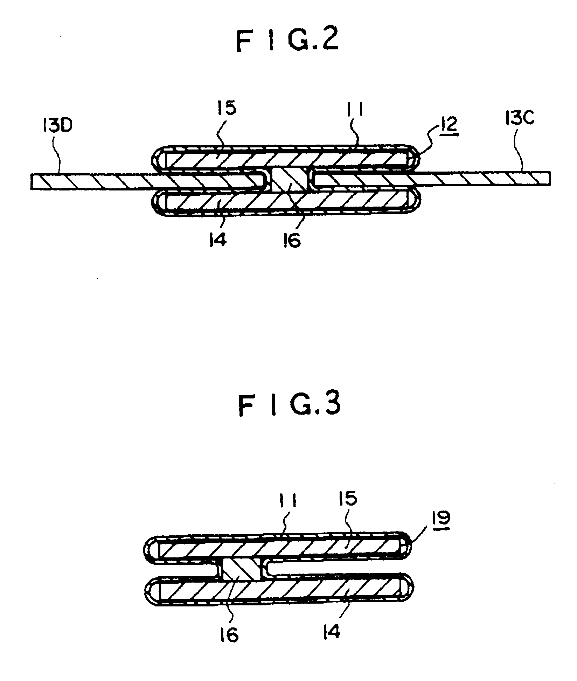

As shown in Fig. 1 and Fig. 2, the tubular synthetic resin film 11 is inserted in the aforementioned folding apparatus to be sandwiched between the folding member 12 and each folding disc 13. Therefore, a state, in which the folding member 12 is inserted into the tubular synthetic resin film 11, is brought, and further, in the state, the tubular synthetic resin film 11 is moved in the direction of the lower flowing side.

After the film 11 is, first, loosely folded by sandwiching between the folding member 12 and a pair of folding discs 13A and 13B of the upper flowing side, it is continuously folded to be the final required configuration by sandwiching the folding member 12 and a pair of folding discs 13C and 13D of the lower flowing side.

Second, after the film 11 is drawn out from the folding member 12, the folded film 11 is certainly creased by being pressed by a pressure member (not shown). After that, the folded film 11 is wound on a roller as an original roll for making a gusset bag.

According to the method for folding the tubular synthetic resin film 11 of the aforementioned embodiment, in the state in which the folding member 12 is inserted into the film 11, the film 11 is folded by adding force along the configuration of the folding member 12 onto the film 11 with the folding disc 13, whereby the film 11 can be accurately folded to be the specified configuration.

In consequence, regardless of the different thickness of the tubular film 11, the folding apparatus can be accurately folded to the specified configuration, and further, corresponds to the complicated folding configuration.

As shown in Fig. 3, even in the case in which a modified gusset bag having different lengths for the right and left gussets is produced by using a folding member 19 having the asymmetrical first and second plates 14 and 15, the same accurate folding measurement as the general gusset bag can be achieved.

With the use of two pairs of folding discs 13A and 13B and the folding discs 13C and 13D, after the film is loosely folded with a pair of folding discs 13A and 13B located at the upper flowing side, the film is folded with the other pair of folding discs 13C and 13D to finally become the required configuration, whereby the film can be smoothly folded.

### [SECOND EMBODIMENT]

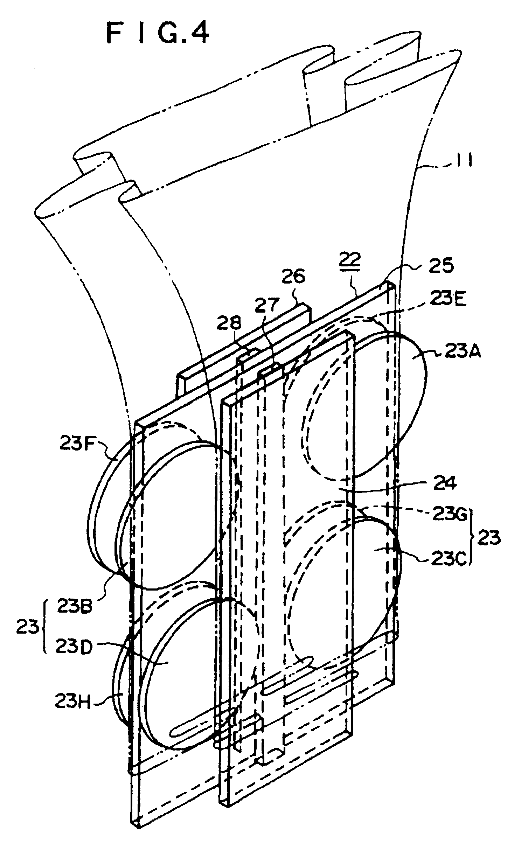

Next, a method for folding the tubular synthetic resin film 11 according to a second embodiment of the present invention will be explained with reference to Fig. 4 to Fig. 6. The embodiment relates to a process for folding the tubular synthetic resin film 11 in order to finally obtain the gusset bag having two gussets on both side faces.

The folding apparatus used for the method for folding in the embodiment will be explained below.

The folding apparatus is composed of a folding member 22, multiple folding discs 23 provided with the folding member 22, and an expanding member 31 located at the upper flowing side of the aforementioned folding member 22.

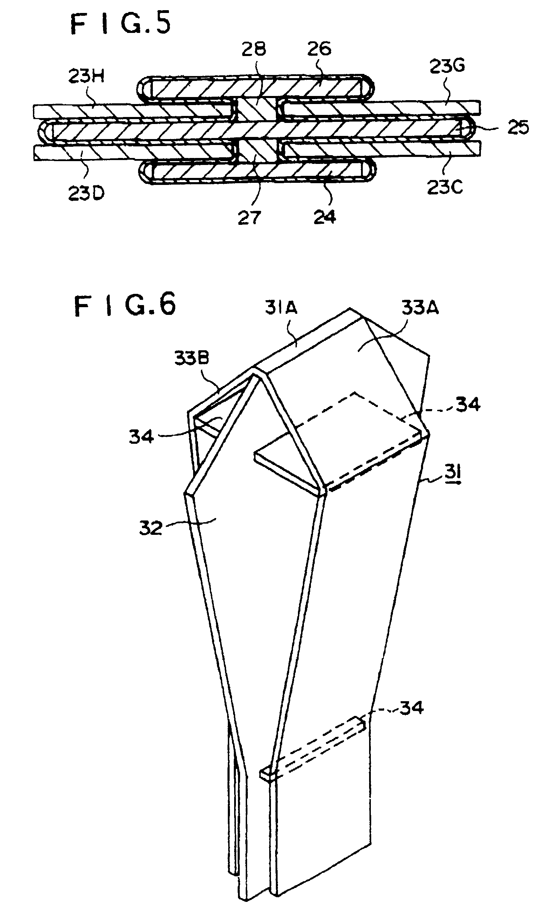

The aforementioned folding member 22 has a first plate 24, second and third plates 25 and 26 located opposite from the first plate 24, and fourth and fifth plates 27 and 28 coupling the first plate 24 to the third plate 26 to one another. The first and third plates 24 and 26 have approximately the same lateral length as the folded gusset bag, and the second plate 25 has approximately the same lateral length as the central lateral length of the folded gusset bag (see Fig. 5).

In the embodiment, the lateral length of the second plate 25 is longer than the first and third plates 24 and 26 to correspond to the configuration of the gusset bag. The aforementioned fourth and fifth plates 27 and 28 have approximately the same lateral length as the measurement between both gussets of the folded gusset bag, and are secured along the longitudinal direction of the central portion between the first and second plates 24 and 25 and between the second and third plates 25 and 26. Therefore, the configuration of the folding member 22 along the moving direction of the film 11 is a drawn-shape (see Fig. 4) by the first plate 24 to the fifth plate 28.

The folding member 22 is supported by an appropriate support instrument (not shown) parallel to the flowing direction of the tubular synthetic resin film 11 in the longitudinal direction of the folding member 22.

The aforementioned multiple folding discs 23 have eight discs, 23A to 23H, in which a first pair of folding discs 23A and 23B of the eight discs are located at the upper flowing side of the moving direction of the film 11 to be sandwiched between the first and second plates 24 and 25 of the folding member 22, and a second pair of folding discs 23C and 23D are located at the lower flowing side to be sandwiched between the aforementioned first and second plates 24 and 25. And further, a third pair of folding discs 23E and 23F and a fourth pair of folding discs 23G and 23H are located to be sandwiched between the second and third plates 25 and 26 like the case of the first pair of folding discs 23A and 23B and the second pair of folding discs 23C and 23D. The thickness of each folding disc 23 and the relative position of the folding discs 23A, 23B, 23E and 23F located at the upper flowing side and the folding discs 23C, 23D, 23G and 23H located at the lower flowing side with the aforementioned fourth and filth plates 27 and 28 are the same as the aforementioned first embodiment.

Incidentally, each of the folding discs 23A to 23H is provided with a shaft (not shown) rotatably supporting the folding disc 23.

As shown in Fig. 6, the aforementioned expanding member 31 is composed of a central plate 32 being the base of one pair of trapeziums forming an equilateral hexagon along the moving direction of the film 11, slope plates 33A and 33B being the top side of each trapezium, and multiple supporters 34 of the slope plates 33A and 33B, to expand the tubular synthetic resin film 11 to be the hexagon-shape along the moving direction of the film. The hexagon of the expanding member 31 is to correspond with the hexagon when the folding member 22 is seen from the front side along the moving direction of the film 11. Therefore, the size of the front side of the expanding member 31 preferably corresponds with the size of the front side of the folding member 22. Incidentally, the expanding member 31 is preferably structured so that its front side as a guide 31A for the film 11 is slightly projected forwards as shown in the drawing.

The expanding member 31 is provided in the upper flowing side adjacent to the folding member 22 by a support instrument (not shown) attached to the folding member 22. The expanding member 31 is oriented so that the central plate 32 is positioned on the line extended from the second plate 25.

The method for folding the tubular synthetic resin film 11 of the embodiment is carried out by using the aforementioned folding apparatus.

As shown in Fig. 4 to Fig. 6, after the film 11 is expanded in the approximate hexagon shape by moving the tubular synthetic resin film 11 to insert the aforementioned expanding member 31 into the film, the film is continuously moved to be sandwiched between the folding member 22 and each folding disc 23.

Here, as well as the case of the first embodiment, after the film is loosely folded by sandwiching between the folding member 22 and two pairs of folding discs 23A and 23B and 23E and 23F which are located at the upper flowing side, the film is folded to be the final purposive configuration by sandwiching between the folding member 22 and two pairs of folding discs 23C and 23D and 23 G and 23H which are located at the lower flowing side.

Next, just after the aforementioned film 11 is sent out from the folding member 22, the folded film 11 is accurately creased by pressing to be sandwiched by a pair of pressing members (not shown). After that, the fold-down film 11 is wound onto an appropriate roller as an original gusset roll.

According to the method for folding the tubular synthetic resin film 11 of the aforementioned embodiment, even when the multiple-layer gusset bag is produced, as well as the case of the first embodiment, the film 11 can be accurately folded to be the specified configuration.

Further, in the embodiment, the tubular film 11 is previously expanded by the expanding member 31 passing through the film 11 before being led to the aforementioned folding member 22, so that resistance produced when the film 11 is being folded can be decreased, whereby the aforementioned multiple-layer gusset can be folded at high speed. Furthermore, in the case of the multiple-layer gusset, it is easy to produce a crease in the folding process, however, by using the aforementioned expanding member 31, production of the crease can be reduced. In addition, the tubular film 11 is tightly contacted to a three-dimensional subject in view of having somewhat static electricity, whereby the tubular film 11 can be effectively expanded as the prior step of the folding process by using the three-dimensional expanding member 31 as described above.

### [EXPERIMENT]

In the second embodiment, with the use of a tubular polyethylene film, formed with an inflation molding, as the aforementioned tubular synthetic resin film 11, the polyethylene film is folded as the process in the second embodiment, with the result that the original gusset roll can be produced at 20 m/min.

## Claims

1. A method for folding a tubular synthetic resin film, comprising the steps of:
inserting a folding member formed to a configuration, of which a film is folded, into the tubular synthetic resin film; and
folding the film by adding force to the film along the configuration, in which the film should be folded, during the state the folding member is inserted into the film.

2. The method for folding the tubular synthetic resin film according to Claim 1 further comprising the step of using a folding disc rotating along with the movement of the film, when the force along the configuration for folding is added to the film.

3. The method for folding the tubular synthetic resin film according to Claim 1, further comprising the step of previously expanding the film with an expanding member passing through the inside of the film, as in the prior step the folding member is inserted into the tubular synthetic resin film.

4. The method for folding the tubular synthetic resin film according to Claim 1, wherein the folding member has a configuration corresponding to a gusset bag having a gusset on each side of the gusset bag.

5. The method for folding the tubular synthetic resin film according to Claim 1, wherein the folding member has a configuration corresponding to a gusset bag having two gussets on both sides of the gusset bag.
